Europäisches Patentamt

European Patent Office

Office européen des brevets

(11) Veröffentlichungsnummer: **0 320 986 B1**

## (12) EUROPÄISCHE PATENTSCHRIFT

(45) Veröffentlichungstag der Patentschrift: **03.02.93**

(21) Anmeldenummer: **88121144.5**

(22) Anmeldetag: **16.12.88**

51 Int. Cl.5: **D21H 17/49**

54 **Flockungs- und/oder Fixiermittel für die Papierleimung.**

(30) Priorität: **17.12.87 DE 3742764**

(43) Veröffentlichungstag der Anmeldung:
**21.06.89 Patentblatt 89/25**

(45) Bekanntmachung des Hinweises auf die
Patenterteilung:
**03.02.93 Patentblatt 93/05**

(84) Benannte Vertragsstaaten:
**AT BE CH DE ES FR GB IT LI LU NL SE**

56 Entgegenhaltungen:

DATABASE WPIL,NO 83-823453,Derwent Publications Ltd., London (GB)

(73) Patentinhaber: **SKW TROSTBERG AKTIENGE-
SELLSCHAFT
Dr.-Albert-Frank-Strasse 32
W-8223 Trostberg(DE)**

(72) Erfinder: **Seeholzer, Josef, Dr.
Eschenstrasse 7
W-8223 Trostberg(DE)**
Erfinder: **Seyerl, Joachim v., Dr.
Griesseestrasse 5
W-8221 Seeon(DE)**

(74) Vertreter: **Huber, Bernhard, Dipl.-Chem. et al
Patentanwälte H. Weickmann, Dr. K. Fincke
F.A. Weickmann, B. Huber Dr. H. Liska, Dr. J.
Prechtel Kopernikusstrasse 9 Postfach 86 08
20
W-8000 München 86(DE)**

**Beschreibung**

Gegenstand der Erfindung sind Flockungs- und/oder Fixiermittel für die Papierleimung im schwach sauren bis schwach basischen pH-Bereich.

Bei der Leimung von Papier, Pappe, Karton und ähnlichen cellulosehaltigen Materialien mit einem Harzleim wird zur Fällung bzw. zur Bindung des Harzleimes auf der Faseroberfläche ein Flockungs- bzw. Fixiermittel eingesetzt. Wesentlich für eine gute Leimung des Papiers ist eine vollständige Ausflockung des verwendeten Leims, damit das Siebwasser möglichst frei von Leim bleibt und so Störungen durch nachfolgende Harzablagerungen vermieden werden. Aus wirtschaftlichen Gründen sollten die erforderlichen Mengen des eingesetzten Flockungs- bzw. Fixiermittels möglichst gering gehalten werden.

In der Praxis werden entsprechend dem jeweiligen pH-Wert drei verschiedene Leimungsverfahren angewendet. Bei dem ersten Verfahren, der sauren Harzleimung, wird zur Fixierung üblicherweise Alaun (Aluminiumsulfathydrat) eingesetzt. Nachteilig bei der sauren Leimung ist, daß man den kostengünstigen Füllstoff Kreide wegen dessen Zersetzung hierbei nicht einsetzen kann. Außerdem ist das Verfahren aufgrund der Abwasserbelastung wegen des hohen Sulfatgehaltes nicht unproblematisch. Schließlich ist das auf diese Weise hergestellte Papier auch nicht alterungsbeständig.

Bei dem zweiten Verfahren, der pseudoneutralen Leimung, wird zur Fixierung entweder nur wenig Alaun oder anstelle von Alaun Natriumaluminat verwendet. Hierbei muß jedoch der pH-Wert in der Stoffmasse exakt eingehalten werden, um überhaupt eine Leimung zu erzielen. Außerdem weisen diese Fixierstoffe bei diesen Bedingungen nur eine begrenzte Wirksamkeit auf.

Beim dritten Verfahren hat man versucht, das cellulosehaltige Material unter neutralen Bedingungen zu leimen. Die Verwendung von Alaun ist hierbei jedoch nicht mehr möglich, weil im neutralen oder schwach basischen Bereich der Gehalt an freien Aluminium-Ionen infolge von Ausfällungen sehr schnell abnimmt und damit der Leim nur noch unvollständig ausflockt.

Gemäß der CH-PS 623 371 wurden deshalb anstelle von Alaun praktisch sulfatfreie Aluminiumpolyhydroxychloride als Flockungsmittel eingesetzt. Diese Verbindungen verhalten sich zwar etwas besser als Alaun, doch geht auch hier bei pH 7 schon nach kurzer Zeit die positive Ladung des Aluminium-Ions infolge von Ausfällungen vorzeitig verloren, d.h. die Wirksamkeit nimmt sehr schnell ab. Daher konnte man die üblichen natürlichen Harzleime bei dieser Papierherstellung unter neutralen Bedingungen nicht verwenden, sondern mußte auf synthetische Leime zurückgreifen, was die Papierherstellung wesentlich verteuerte. Einen Ausweg bot hierbei das Verfahren gemäß der DE-OS 35 00 408, welche lehrt, daß man als Fixier- bzw. Flockungsmittel ein kationisches Dicyandiamidharz einsetzt, da dieses unter neutralen bis schwach basischen Bedingungen natürliche und synthetische Leimungsmittel flocken und auf der Faser fixieren kann.

In dem Verfahren gemäß JP-A 58 174 696 werden, ebenfalls im neutralen bis schwach basischen Bereich, eine wäßrige Dispersion von organischen Ketendimeren (a) unter Zusatz eines wasserlöslichen Aluminiumsalzes (b) und eines Kondensats aus Dicyandiamid und Formaldehyd (c) für die Leimung verwendet. (a) und (c) sind zu 0,05 bis 0,60 Gew.-%, basierend auf dem Gewicht des Papierbreis, und (b) ist 1 bis 20 mal mehr als (c) vorhanden. Als Aluminiumsalze werden Aluminiumsulfate, (Poly-)Aluminiumchloride etc. verwendet, die Modifizierer wie z.B. Diamine enthalten können.

Obwohl diese Harze schon eine gute Wirkung im Neutralbereich besitzen, war eine weitere Optimierung hinsichtlich des Arbeitsbereiches wünschenswert.

Der Erfindung liegt daher die Aufgabe zugrunde, ein Flockungs-und/oder Fixiermittel für die Papierleimung im schwach sauren bis schwach alkalischen pH-Bereich zu entwickeln, welches die genannten Nachteile des Standes der Technik nicht aufweist, sondern im gesamten Arbeitsbereich ausgezeichnete Wirkung hinsichtlich der Fällungs- bzw. Fixiereigenschaften aufweist.

Diese Aufgabe wird erfindungsgemäß gelöst durch Flockungs- und/oder Fixiermittel für die Papierleimung im schwach sauren bis schwach alkalischen pH-Bereich, welche dadurch gekennzeichnet sind, daß sie in überwiegender Menge ein Co-Kondensationsprodukt der Komponenten kationisches Dicyandiamidharz und Polyaluminiumhydroxy-Verbindung enthalten oder daraus bestehen.

Es hat sich nämlich überraschenderweise gezeigt, daß das erfindungsgemäße Co-Kondensationsprodukt besser ist, als nach den bekannten Wirkungen der Einzelkomponeten zu erwarten war, d.h. daß ein synergistischer Effekt vorliegt.

Das kationische Dicyandiamidharz, welches als Komponente des erfindungsgemäßen Mittels vorliegen kann, ist beispielsweise in der DE-OS 35 00 408 beschrieben.

Die Herstellung dieses Harzes erfolgt beispielsweise durch Reaktion von 1 Mol Dicyandiamid mit 1,0 bis 4,0 Mol Formaldehyd in Gegenwart von 0,1 bis 2,0 Mol einer anorganischen oder organischen Säure und/oder eines Ammonium- oder Aminsalzes einer anorganischen oder organischen Säure und ggf. 0,05 bis 0,5 Mol eines ein- oder mehrwertigen Amins.

2

Als anorganische Säuren kommen dabei insbesondere Salzsäure, Schwefelsäure, Salpetersäure und als organische Säuren Ameisensäure, Essigsäure oder Oxalsäure in Frage.

Bei den Ammoniumsalzen sind Ammoniumchlorid und -sulfat sowie Ammoniumformiat und -acetat als bevorzugt anzusehen.

Als Aminsalze werden insbesondere Salze organischer Amine wie z.B. Ethylendiamin-Formiat oder Triethylentetramin-Hydrochlorid eingesetzt.

Als ggf. noch einsetzbare Aminkomponente können zwei- oder mehrwertige aliphatische Amine verwendet werden, wobei Ethylendiamin, Propylendiamin, Diethylentriamin und Triethylentetramin sowie substituierte Derivate wie Mono- oder Diethanolamin bevorzugt sind. Diese kationischen Dicyandiamid-Formaldehyd-Harze weisen pH-Werte zwischen 3 und 5 auf und sind in jedem Verhältnis mit Wasser mischbar und insbesondere als 30 bis 60 %ige wäßrige Lösung gut einsetzbar.

Die zweite Komponente des erfindungsgemäßen Mittels besteht aus Polyaluminiumhydroxy-Verbindungen, die vorzugsweise einen $Al_2O_3$-Gehalt von 5 bis 20 % besitzen.

Die erfindungsgemäß eingesetzten Polyaluminiumhydroxy-Verbindungen können in Form von Salzen mit üblichen anorganischen Anionen wie z.B. Chlorid- oder Sulfat-, sowie organischen Anionen wie z.B. Formiat- oder Acetationen eingesetzt werden.

Man kann ganz oder teilweise das Co-Kondensationsprodukt aus kationischem Dicyandiamidharz und Polyaluminiumhydroxy-Verbindung verwenden, wobei das Co-Kondensationsprodukt sogar eine noch bessere Wirkung und Lagerstabilität aufweist als die Mischung der Einzelkomponenten.

Das Verhältnis von Polyaluminiumhydroxy-Verbindung und kationisches Dicyandiamidharz im Co-Kondensationsprodukt kann in weiten Grenzen variieren, doch hat sich in der Praxis ein Molverhältnis von Aluminium zu Dicyandiamid von 4 : 1 bis 1 : 4 als besonders vorteilhaft erwiesen.

Die Herstellung der erfindungsgemäßen Flockungs- bzw. Fixiermittel ist unproblematisch und kann ohne großen technischen Aufwand bewerkstelligt werden.

Für die Herstellung des Co-Kondensationsproduktes können verschiedene Methoden angewendet werden, weil der Einbau der Polyaluminiumhydroxy-Verbindung in das kationische Dicyandiamidharz praktisch in jeder Stufe der Kondensationsreaktion vorgenommen werden kann. Ein besonders einfacher Weg besteht im Mischen des kationischen Dicyandiamidharzes mit der Polyaluminiumhydroxy-Verbindung in wäßriger Lösung und Erhitzen dieser Lösung vorzugsweise auf etwa 50 bis 120°C. Je nach Temperatur ist die Co-Kondensation nach etwa 10 bis 120 Minuten beendet.

Alternativ kann man während der Kondensation des Dicyandiamidharzes die Polyaluminiumhydroxy-Verbindung zusetzen oder in einer bevorzugten Ausführungsform zunächst Vorstufen der Polyaluminiumhydroxy-Verbindung in Form von Ammoniak und Aluminiumsalzen wie z.B. Aluminiumchlorid oder Aluminiumsulfat vorlegen und die Polyaluminiumhydroxy-Verbindung intermediär erzeugen. Hierbei haben sich in der Praxis sowohl eine einstufige als auch eine zweistufige Verfahrensmethode bewährt. Beim einstufigen Verfahren wird Ammoniak und Aluminiumsalz vorgelegt. Anschließend werden die weiteren Bestandteile des Harzes, nämlich Formaldehyd und Dicyandiamid, zugegeben und anschließend wird erhitzt. Hierbei bildet sich aus Ammoniak und dem Aluminiumsalz intermediär die Polyaluminiumhydroxy-Verbindung sowie das für die Bildung des kationischen Dicyandiamidharzes erforderliche Ammoniumsalz. Aus diesem Grund sind die Mengen an Ammoniak und Aluminiumsalz entsprechend den gewünschten Molverhältnissen einzustellen.

Beim zweistufigen Verfahren wird ebenfalls Ammoniak und Aluminiumsalz in Form einer wäßrigen Lösung vorgelegt und zur Bildung der Polyaluminiumhydroxy-Verbindung und Ammoniumsalz auf 50 bis 120°C erhitzt. Anschließend wird das Reaktionsgemisch abgekühlt, Formaldehyd und Dicyandiamid zugegeben und dann wieder erhitzt, um die Co-Kondensationsreaktion durchzuführen. Nach Beendigung der Co-Kondensation wird die Reaktionslösung abgekühlt. Die Temperaturen für die Durchführung der Co-Kondensation bewegen sich normalerweise zwischen 50 und 120°C.

Die Konzentration der wäßrigen Lösung sollte so gewählt werden, daß man Feststoffgehalte an Co-Kondensationsprodukten zwischen 30 und 60 Gew.-% erhält. Die Co-Kondensationsprodukte können in dieser Form ohne weitere Aufarbeitung zum Einsatz gelangen.

Für die Durchführung der Kondensationsreaktion sind keine besonderen Maßnahmen erforderlich, um bestimmte pH-Werte einzuhalten, denn die Reaktionskomponenten regeln den pH-Bereich so, daß er im sauren Bereich liegt. Die fertigen Co-Kondensationsprodukte weisen dann üblicherweise einen pH-Wert zwischen 1 und 5 auf.

Die erfindungsgemäßen Co-Kondensationsprodukte werden bei der Papierleimung in Form ihrer wäßrigen Lösungen eingesetzt und zwar in einer Menge von 0,1 bis 5 Gew.-% Feststoffgehalt des Mittels bezogen auf das Trockengewicht des Papiers. Vorzugsweise beträgt diese Menge 0,2 bis 1 Gew.-%.

Das erfindungsgemäße Flockungs- bzw. Fixiermittel eignet sich in hervorragender Weise für handelsübliche Leime auf natürlicher oder synthetischer Basis. Bei den natürlichen Leimen seien hierbei Kolophonium, Tierleim, Casein, Stärke, Wachse, Fettsäuren und Tallharze, bei den synthetischen Leimen solche auf Basis Ketendimeren, Acrylsäuren, Maleinsäureanhydriden oder Polyvinylacetaten besonders hervorgehoben. In gleicher Weise sind die erfindungsgemäßen Mittel auch für modifizierte Leime (wie z.B. Kolophonium mit dienophilen Säuren) geeignet.

Auch hinsichtlich der bei der Papierherstellung üblichen Füllstoffe und Pigmente bestehen keinerlei Beschränkungen, d.h. alle gängigen Füllstoffe sind mit dem erfindungsgemäßen Mittel gut verträglich.

Das erfindungsgemäße Flockungs- bzw. Fixiermittel gewährleistet sowohl im schwach sauren als auch im schwach alkalischen pH-Bereich eine praktisch vollständige Ausflockung des Leimes und liefert damit die Voraussetzung für eine gute und problemlose Leimung bei der Neutral- und Pseudoneutralleimung.

Die nachfolgenden Beispiele sollen die Erfindung näher erläutern.

Beispiel 1

Herstellung des Co-Kondensationsproduktes P1 durch Mischen und anschließendes Erhitzen der Komponenten.

100 Gew.-Teile einer Polyaluminiumhydroxy-chlorid (PAC)-Lösung (64 %ig, $Al_2O_3$-Gehalt 18 %) und 128 Gew.-Teile kationisches Dicyandiamidharz (50 %ig hergestellt nach dem Beispiel der DE-OS 35 00 408) werden gemischt, 10 Minuten auf 100°C erhitzt und anschließend wieder abgekühlt. Das Co-Kondensationsprodukt besitzt einen pH-Wert von 2,0 und einen Feststoffgehalt von 55 % (Bestimmung 1 Stunde bei 120°C).

Beispiel 2 (Vergleich, kein erfindungsgemäßes Beispiel)

Herstellung verschiedener Gemische bestehend aus kationischem Dicyandiamidharz (DCD-Harz) in Form einer 50 % wäßrigen Lösung (hergestellt nach dem Beispiel der DE-OS 35 00 408) und Polyaluminiumhydroxy-chlorid (PAC) entsprechend Beispiel 1 als 64 %ige Lösung durch Mischen bei Raumtemperatur in folgendem Feststoffverhältnis:

```
Produkt                 Feststoffverhältnis


P2        1 Gew.-Teil DCD-Harz + 2 Gew.-Teile PAC,

P3        1 Gew.-Teil "      "  + 3 Gew.-Teile "

P4        1 Gew.-Teil "      "  + 4 Gew.-Teile "
```

Beispiel 3

Herstellung des Co-Kondensationsproduktes P5 (einstufig).

In 60 Gew.-Teile Wasser werden nach Zugabe von 68 Gew.-Teilen Ammoniak-Lösung (25 %ig) 120,7 Gew.-Teile festes $AlCl_3$ ($AlCl_3 \cdot 6H_2O$) eingerührt. Nach Zugabe von 62,5 Gew.-Teilen Formalin (30 %ig) und 21,0 Gew.-Teilen Dicyandiamid wird die Mischung auf 100°C erhitzt und zwei Stunden lang bei dieser Temperatur kondensiert. Nach dem Abkühlen besitzt das Co-Kondensationsprodukt einen pH-Wert von 2,6 und einen Feststoffgehalt von 45 % (Bestimmung 1 Stunde bei 120°C).

Beispiel 4

Herstellung des Co-Kondensationsproduktes P6 (zweistufig).

In 231,4 Gew.-Teile $AlCl_3$-Lösung (29 %ig) werden unter Rühren 68 Gew.-Teile wäßrige $NH_3$-Lösung (25 %ig) eingetropft. Nach beendeter Zugabe wird die Mischung 1 Stunde lang auf 100°C erhitzt. Nach Abkühlung auf 60°C werden 125 Gew.-Teile Formalin (30 %ig) und 42 Gew.-Teile Dicyandiamid zugegeben und die Lösung 1 Stunde auf 100°C erhitzt. Nach dem Abkühlen besitzt die Lösung einen pH-Wert von 2,8

4

und einen Feststoffgehalt von 38 % (Bestimmung 1 Stunde bei 120°C).

Beispiel 5

Um die Wirksamkeit der erfindungsgemäßen Mittel zu beweisen, wurden deren Flockungsverhalten an einem handelsüblichen modifizierten Harzleim (Roscol) untersucht.

Die Flockungen wurden in Wasser mit 30°dH (deutscher Härte) durchgeführt. Im Wasser waren 1000 ppm des Leimes fest dispergiert. Bezogen auf den Leim wurden dann bei den Versuchen die Flockungs- bzw. Fixiermittel in Mengen von 10 - 500 ppm zugesetzt, gerührt und filtriert. Es wurde die Trübung der Filtrate beurteilt, wobei folgende Wertzahlen vergeben wurden:

6 = weiß (keine Fällung)
5 = stark trüb (Fällung)
4 = trüb
3 = leicht trüb
2 = fast klar
1 = klar

Wie man aus Tabelle 1 erkennen kann, zeigen die erfindungsgemäßen Produkte P1 und P6 eine deutlich bessere Flockungswirkung auf als das kationische Dicyandiamid (DCD)-Harz (hergestellt nach dem Beispiel der DE-OS 35 00 408) und das Polyaluminiumhydroxy-chlorid (PAC) in Form des handelsüblichen Produktes Prodefloc AC 190.

**Beispiel 6**

Aktivitätsbestimmung der erfindungsgemäßen Produkte bei verschiedenen pH-Werten.

Die Aktivität der erfindungsgemäßen Produkte wurde durch Fällung des Azorubin-Farbstoffs (anionischer sulfosaurer Azofarbstoff) im Vergleich mit dem kationischen Dicyandiamid (DCD)-Harz und dem

Tab. 1                 Flockung von Roscol

| ppm-Zugabe | 10 | 20 | 30 | 40 | 50 | 60 | 100 | 190 | 200 | 310 | 400 | 500 |
|---|---|---|---|---|---|---|---|---|---|---|---|---|
| **Produkt** | | | | | | | | | | | | |
| DCD-Harz (Vergleich) | 5 | 4 | 3,5 | 3 | 3 | 3 | 3 | 3 | 4 | - | - | - |
| PAC (Vergleich) | 5 | 5 | 4 | 4 | 4 | 3,5 | 3 | 3 | 3 | - | - | - |
| P1 | 6 | 4 | 3 | 2 | 2 | 2 | 2 | 2 | 2 | 2 | 2 | 2 |
| P2 (Vergleich) | 6 | 6 | 3 | 3 | 2 | 2 | 2 | 2 | 2 | 2 | 2 | 2 |
| P6 | 6 | 3 | 2 | 2 | 2 | 1 | 1 | 1 | 2 | 2 | 2 | 2 |

6

Polyaluminiumhydroxy-Chlorid (PAC) entsprechend Beispiel 4 ermittelt. Bestimmt wurde hierbei der Wirkstoffgehalt des Flockungsoptimums im Vergleich mit dem Optimum bei der Flockung mit destilliertem Wasser bei pH 5. Das Optimum der Flockung wird nach der Filtration des ausgeflockten Farbstoffes bestimmt.

Methode:

Zu 54 kg Leitungswasser wird soviel 10 %ige NaOH-Lösung zugegeben, daß nach der Zugabe des Flockungsmittels der pH den gewünschten Wert erreicht. Dieser Lösung werden dann 6 ml 10 %iges Flockungsmittel zugesetzt. Nach einer Standzeit von 3 Minuten wird diese Lösung unter Rühren in 100 ml Azorubinlösung mit 100 ppm Farbstoffgehalt eingetropft, bis die optimale Farbstoff-Flockung erreicht ist.

Wie die beiliegenden Tabellen 2 und 3 belegen, weisen die erfindungsgemäßen Produkte eine deutlich bessere Flockungswirkung auf als Polyaluminiumhydroxy-Chlorid allein. Die erfindungsgemäßen Produkte zeigen auch eine synergistische Wirkung, d.h. ihre Aktivität ist größer als es rechnerisch dem Mischungsverhältnis entspricht. Dies zeigt sich beispielsweise bei der Aktivität von P1:

|  | berechnet | gefunden |
|---|---|---|
| pH 6 | 63,5 % | 84 % |
| pH 7 | 36 % | 57 % |
| pH 8 | 27,5 % | 55 % |

Tab. 2

<u>Bestimmung der Aktivität von</u>

<u>Flockungsmitteln bei verschiedenen pH-Werten</u>

PAC

DCD-Harz

P 1

Tab. 3

<u>Bestimmung der Aktivität von</u>

<u>Flockungsmitteln bei verschiedenen pH-Werten</u>

pH

8 —

7 —

6 —

0  10  20  30  40  50  60  70  80  90  100%  Aktivität

<u>P2</u>

pH

8 —

7 —

6 —

0  10  20  30  40  50  60  70  80  90  100%  Aktivität

<u>P3</u>

pH

8 —

7 —

6 —

0  10  20  30  40  50  60  70  80  90  100%  Aktivität

<u>P4</u>

pH

8 —

7 —

6 —

0  10  20  30  40  50  60  70  80  90  100%  Aktivität

<u>P6</u>

Beispiel 7

Leimung eines üblichen, aus Altpapier und Ausschuß bestehenden weißen Deckenstoffs für die Herstellung von Karton.

Ein aufgeschlagener Deckenstoff mit 4 Gew.-% Stoffdichte wurde mit Siebwasser auf 1 Gew.-% Stoffdichte verdünnt. Der pH-Wert der Suspension betrug 8,4. Nach Zugabe von Leim, Fixiermittel und Retentionsmittel wurden auf dem Labor-Blattbildner Blätter hergestellt und diese mit Hilfe des Cobb-Tests auf den Leimungsgrad untersucht.

Bedingungen:

Leimsorte:          natürlicher modifizierter Harzleim (Collodin B 433 S)
                    Zusatz: 1 % atro Stoff
Fixiermittel:       folgende verschiedene erfindungsgemäße Produkte im Vergleich mit kationischen

9

Dicyandiamidharz und Polyaluminiumhydroxy-chlorid allein.

Zusätze: 0,3/0,5/0,7 % atro Stoff:

1.) Kationisches Dicyandiamidharz (hergestellt nach dem Bsp. der DE-OS 35 00 408)

2.) Polyaluminiumhydroxy-chlorid (Prodefloc AC 190)

3.) P1

4.) P2 (Vergleich)

5.) P5

Retentionsmittel: Percol 280 L

Zugabe: Zu einer 1 Gew.-%igen Stoffsuspension wurde unter Rühren die entsprechende Leimmenge (1 % atro Stoff), nach 60 Sek. Rührzeit die angegebenen Fixiermittel und nach weiteren 15 Sek. Rühren das Retentionsmittel zugegeben. 5 Sek. später erfolgte die Blattbildung. Gleich nach der Trocknung wurde von den gebildeten Blättern der Cobb-Wert bestimmt.

In Tabelle 4 sind die Ergebnisse zusammengefaßt, wobei ein niedriger Cobb-Wert eine geringe Wasseraufnahme, d.h. eine bessere Leimung bedeutet.

Wie man sieht, wird mit Hilfe der erfindungsgemäßen Produkte eine bessere Leimung erzielt als durch Verwendung von kationischen Dicyandiamidharzen oder Polyaluminiumhydroxy-chlorid allein.

Tabelle 4

| Fixiermittel | % Mittel | Cobb 60, Durchschnitt |
|---|---|---|
| 1.) kation. DCD-Harz (Vergleich) | 0,3 | 110 |
| | 0,5 | 61 |
| | 0,7 | 76 |
| 2.) PAC (Vergleich) | 0,3 | 107 |
| | 0,5 | 71 |
| | 0,7 | 59 |
| 3.) P1 | 0,3 | 102 |
| | 0,5 | 57 |
| | 0,7 | 47 |
| 4.) P3 (Vergleich) | 0,3 | 81 |
| | 0,5 | 54 |
| | 0,7 | 43 |
| 5.) P5 | 0,3 | 86 |
| | 0,5 | 59 |
| | 0,7 | 44 |

**Patentansprüche**

**Patentansprüche für folgende Vertragsstaaten : AT, BE, CH, DE, FR, GB, IT, LI, LU, NL, SE**

1. Flockungs- und/oder Fixiermittel für die Papierleimung im schwach sauren bis schwach alkalischen pH-Bereich,

   **dadurch gekennzeichnet,**

   daß sie in überwiegender Menge ein Co-Kondensationsprodukt der Komponenten kationisches Dicyandiamidharz und Polyaluminiumhydroxy-Verbindung enthalten oder daraus bestehen.

2. Mittel nach Anspruch 1,

   **dadurch gekennzeichnet,**

   daß das kationische Dicyandiamidharz das Reaktionsprodukt von 1 Mol Dicyandiamid mit 1,0 bis 4,0 Mol Formaldehyd in Gegenwart von 0,1 bis 2,0 Mol einer anorganischen oder organischen Säure und/oder eines Ammonium- oder Aminsalzes einer anorganischen oder organischen Säure und ggf. 0,05 bis 0,5 Mol eines ein- oder mehrwertigen Amins ist.

**3.** Mittel nach den Ansprüchen 1 und 2,
**dadurch gekennzeichnet,**
daß die Polyaluminiumhydroxy-Verbindung einen $Al_2O_3$-Gehalt von 5 bis 20 % aufweist.

**4.** Mittel nach den Ansprüchen 1 bis 3,
**dadurch gekennzeichnet,**
daß die Polyaluminiumhydroxy-Verbindung in Form des Chlorids oder Sulfats vorliegt.

**5.** Mittel nach den Ansprüchen 1 bis 3,
**dadurch gekennzeichnet,**
daß die Polyaluminiumhydroxy-Verbindung in Form des Formiats oder Acetats vorliegt.

**6.** Mittel nach einem der Ansprüche 1 bis 5,
**dadurch gekennzeichnet,**
daß das Co-Kondensationsprodukt ein Molverhältnis von Dicyandiamid zu Aluminium 4 : 1 bis 1 : 4 aufweist.

**7.** Verfahren zur Herstellung eines Mittels nach den Ansprüchen 1 bis 6
**dadurch gekennzeichnet,**
daß man das Co-Kondensationsprodukt durch Einbau der Polyaluminiumhydroxy-Verbindung in das kationische Dicyandiamidharz herstellt.

**8.** Verfahren nach Anspruch 7,
**dadurch gekennzeichnet,**
daß man eine wäßrige Lösung von kationischem Dicyandiamidharz und Polyaluminiumhydroxy-Verbindung bei 50 bis 120° C erhitzt.

**9.** Verfahren nach Anspruch 7,
**dadurch gekennzeichnet,**
daß man a) die Vorstufen der Polyaluminiumhydroxy-Verbindung in Form von Ammoniak und Aluminiumsalz vorlegt, b) Formaldehyd und Dicyandiamid zugibt und c) das Reaktionsgemisch zur Co-Kondensation erhitzt.

**10.** Verfahren nach Anspruch 7,
**dadurch gekennzeichnet,**
daß man a) die Vorstufen der Polyaluminiumhydroxy-Verbindung in Form von Ammoniak und Aluminiumsalz vorlegt, b) das Reaktionsgemisch zur Bildung der Polyaluminiumhydroxy-Verbindung auf 50 bis 120° C erhitzt, c) danach, ggf. nach dem Abkühlen, Formaldehyd und Dicyandiamid zugibt und d) das Reaktionsgemisch zur Co-Kondensation erneut erhitzt.

**11.** Verfahren nach den Ansprüchen 9 oder 10,
**dadurch gekennzeichnet,**
daß man die Co-Kondensation bei Temperaturen von 50 bis 120° C durchführt.

**12.** Verfahren nach einem der Ansprüche 9 bis 11,
**dadurch gekennzeichnet,**
daß man als Aluminiumsalz $AlCl_3$ verwendet.

**13.** Verwendung des Mittels nach den Ansprüchen 1 bis 6 zur Papierleimung in einer Menge von 0,1 bis 5 Gew.-% Feststoffgehalt des Co-Kondensationsproduktes bezogen auf das Trockengewicht des Papiers.

**14.** Verwendung gemäß Anspruch 13 in einer Menge von 0,2 bis 1,0 Gew.-%.

**Patentansprüche für folgenden Vertragsstaat : ES**

**1.** Verfahren zur Herstellung eines
Flockungs- und/oder Fixiermittels für die Papierleimung im schwach sauren bis schwach alkalischen pH-Bereich, welches in überwiegender Menge ein Co-Kondensationsprodukt der Komponenten kationi-

EP 0 320 986 B1

sches Dicyandiamidharz und Polyaluminiumhydroxy-Verbindung enthält oder daraus besteht, **dadurch gekennzeichnet,** daß man das Co-Kondensationsprodukt durch Einbau der Polyaluminiumhydroxy-Verbindung in das kationische Dicyandiamidharz herstellt.

2. Verfahren nach Anspruch 1,
**dadurch gekennzeichnet,**
daß man als kationisches Dicyandiamidharz das Reaktionsprodukt von 1 Mol Dicyandiamid mit 1,0 bis 4,0 Mol Formaldehyd in Gegenwart von 0,1 bis 2,0 Mol einer anorganischen oder organischen Säure und/oder eines Ammonium- oder Aminsalzes einer anorganischen oder organischen Säure und ggf. 0,05 bis 0,5 Mol eines ein- oder mehrwertigen Amins einsetzt.

3. Verfahren nach den Ansprüchen 1 und 2,
**dadurch gekennzeichnet,**
daß man eine Polyaluminiumhydroxy-Verbindung mit einem $Al_2O_3$-Gehalt von 5 bis 20 % verwendet.

4. Verfahren nach den Ansprüchen 1 bis 3,
**dadurch gekennzeichnet,**
daß man die Polyaluminiumhydroxy-Verbindung in Form des Chlorids oder Sulfats einsetzt.

5. Verfahren nach den Ansprüchen 1 bis 3,
**dadurch gekennzeichnet,**
daß man die Polyaluminiumhydroxy-Verbindung in Form des Formiats oder Acetats einsetzt.

6. Verfahren nach einem der Ansprüche 1 bis 5,
**dadurch gekennzeichnet,**
daß man das Co-Kondensationsprodukt im Molverhältnis von Dicyandiamid zu Aluminium 4 : 1 bis 1 : 4 herstellt.

7. Verfahren nach Anspruch 1,
**dadurch gekennzeichnet,**
daß man eine wäßrige Lösung von kationischem Dicyandiamidharz und Polyaluminiumhydroxy-Verbindung bei 50 bis 120°C erhitzt.

8. Verfahren nach Anspruch 1,
**dadurch gekennzeichnet,**
daß man a) die Vorstufen der Polyaluminiumhydroxy-Verbindung in Form von Ammoniak und Aluminiumsalz vorlegt, b) Formaldehyd und Dicyandiamid zugibt und c) das Reaktionsgemisch zur Co-Kondensation erhitzt.

9. Verfahren nach Anspruch 1,
**dadurch gekennzeichnet,**
daß man a) die Vorstufen der Polyaluminiumhydroxy-Verbindung in Form von Ammoniak und Aluminiumsalz vorlegt, b) das Reaktionsgemisch zur Bildung der Polyaluminiumhydroxy-Verbindung auf 50 bis 120°C erhitzt, c) danach, ggf. nach dem Abkühlen, Formaldehyd und Dicyandiamid zugibt und d) das Reaktionsgemisch zur Co-Kondensation erneut erhitzt.

10. Verfahren nach den Ansprüchen 8 oder 9 ,
**dadurch gekennzeichnet,**
daß man die Co-Kondensation bei Temperaturen von 50 bis 120°C durchführt.

11. Verfahren nach einem der Ansprüche 8 bis 10,
**dadurch gekennzeichnet,**
daß man als Aluminiumsalz $AlCl_3$ verwendet.

12. Verwendung des nach den Ansprüchen 1 bis 11 hergestellten Mittels zur Papierleimung in einer Menge von 0,1 bis 5 Gew.-% Feststoffgehalt des Co-Kondensationsproduktes bezogen auf das Trockengewicht des Papiers.

12

**13.** Verwendung gemäß Anspruch 12 in einer Menge von 0,2 bis 1,0 Gew.-%.

**Claims**

**Claims for the following Contracting States : AT, BE, CH, DE, FR, GB, IT, LI, LU, NL, SE**

1. Flocculation and/or fixing agent for paper sizing in the weakly acidic to weakly alkaline pH range, characterised in that it contains or consists to a preponderant amount of a co-condensation product of the components cationic dicyandiamide resin and polyaluminium hydroxy compound.

2. Agent according to claim 1, characterised in that the cationic dicyandiamide resin is the reaction product of 1 mol of dicyandiamide with 1.0 to 4.0 mol of formaldehyde in the presence of 0.1 to 2.0 mol of an inorganic or organic acid and/or of an ammonium or amine salt of an inorganic or organic acid and possibly of 0.05 to 0.5 mol of a mono- or polybasic amine.

3. Agent according to claim 1 or 2, characterised in that the polyaluminium hydroxy compound has an $Al_2O_3$ content of 5 to 20%.

4. Agent according to claims 1 to 3, characterised in that the polyaluminium hydroxy compound is present in the form of the chloride or sulphate.

5. Agent according to claims 1 to 3, characterised in that the polyaluminium hydroxy compound is present in the form of the formate or acetate.

6. Agent according to one of claims 1 to 5, characterised in that the co-condensation product has a mol ratio of dicyandiamide to aluminium of 4:1 to 1:4.

7. Process for the production of an agent according to claims 1 to 6, characterised in that one produces the co-condensation product by incorporation of the polyaluminium hydroxy compound into the cationic dicyandiamide resin.

8. Process according to claim 7, characterised in that one heats an aqueous solution of cationic dicyandiamide resin and polyaluminium hydroxy compound at 50 to 120°C.

9. Process according to claim 7, characterised in that one a) takes the precursors of the polyaluminium hydroxy compound in the form of ammonia and aluminium salt, b) adds formaldehyde and dicyandiamide and c) heats the reaction mixture for the co-condensation.

10. Process according to claim 7, characterised in that one a) takes the precursors of the polyaluminium hydroxy compound in the form of ammonia and aluminium salt, b) heats the reaction mixture to 50 to 120°C for the formation of the polyaluminium hydroxy compound, c) thereafter, possibly after cooling, adds thereto formaldehyde and dicyandiamide and d) again heats the reaction mixture for the co-condensation.

11. Process according to claims 9 or 10, characterised in that one carries out the co-condensation at temperatures of 50 to 120°C.

12. Process according to one of claims 9 to 11, characterised in that one uses $AlCl_3$ as aluminium salt.

13. Use of the agent according to claims 1 to 6 for paper sizing in an amount of 0.1 to 5 wt.% solids content of the co-condensation product, referred to the dry weight of the paper.

14. Use according to claim 13 in an amount of 0.2 to 1.0 wt.%.

**Claims for the following Contracting State : ES**

1. Process for the production of a flocculation and/or fixing agent for paper sizing in the weakly acidic to weakly alkaline pH range which contains or consists to a preponderant amount of a co-condensation product of the components cationic dicyandiamide resin and polyaluminium hydroxy compounds, characterised in that one produces the co-condensation product by incorporation of the polyaluminium hydroxy compound into the cationic dicyandiamide resin.

2. Agent according to claim 1, characterised in that, as cationic dicyandiamide resin, one uses the reaction product of 1 mol of dicyandiamide with 1.0 to 4.0 mol of formaldehyde in the presence of 0.1 to 2.0 mol of an inorganic or organic acid and/or of an ammonium or amine salt of an inorganic or organic acid and possibly of 0.05 to 0.5 mol of a mono- or polybasic amine.

3. Process according to claim 1 or 2, characterised in that one uses a polyaluminium hydroxy compound with an $Al_2O_3$ content of 5 to 20%.

4. Process according to claims 1 to 3, characterised in that one uses the polyaluminium hydroxy compound in the form of the chloride or sulphate.

5. Process according to claims 1 to 3, characterised in that one uses the polyaluminium hydroxy compound in the form of the formate or acetate.

6. Agent according to one of claims 1 to 5, characterised in that one produces the co-condensation product in the mol ratio of dicyandiamide to aluminium of 4:1 to 1:4.

7. Process according to claim 1, characterised in that one heats an aqueous solution of cationic dicyandiamide resin and polyaluminium hydroxy compound at 50 to 120°C.

8. Process according to claim 1, characterised in that one a) takes the precursors of the polyaluminium hydroxy compound in the form of ammonia and aluminium salt, b) adds thereto formaldehyde and dicyandiamide and c) heats the reaction mixture for the co-condensation.

9. Process according to claim 1, characterised in that one a) takes the precursors of the polyaluminium hydroxy compound in the form of ammonia and aluminium salt, b) heats the reaction mixture to 50 to 120°C for the formation of the polyaluminium hydroxy compound, c) thereafter, possibly after cooling, adds thereto formaldehyde and dicyandiamide and d) again heats the reaction mixture for the co-condensation.

10. Process according to claims 8 or 9, characterised in that one carries out the co-condensation at temperatures of 50 to 120°C.

11. Process according to one of claims 8 to 10, characterised in that one uses $AlCl_3$ as aluminium salt.

12. Use of the agent produced according to claims 1 to 11 for paper sizing in an amount of from 0.1 to 5 wt.% solids content of the co-condensation product, referred to the dry weight of the paper.

13. Use according to claim 12 in an amount of 0.2 to 1.0 wt.%.

**Revendications**

**Revendications pour les Etats contractants suivants : AT, BE, CH, DE, FR, GB, IT, LI, LU, NL, SE**

1. Agent de floculation et/ou de fixation pour l'encollage du papier dans un domaine de pH faiblement acide à faiblement alcalin, caractérisé en ce qu'il contient en une quantité prédominante ou qu'il est constitué par un produit de co-condensation d'une résine cationique de dicyandiamide et d'un composé polyaluminiumhydroxy.

2. Agent selon la revendication 1, caractérisé en ce que la résine cationique de dicyandiamide est le produit de réaction d'1 mole de dicyandiamide avec 1,0 à 4,0 moles de formaldéhyde en présence de 0,1 à 2,0 moles d'un acide inorganique ou organique et/ou d'un sel d'ammonium ou d'amine d'un acide inorganique ou organique et éventuellement de 0,05 à 0,5 mole d'une mono- ou polyamine.

3. Agent selon les revendications 1 et 2, caractérisé en ce que le composé polyaluminiumhydroxy présente une teneur en $Al_2O_3$ de 5 à 20 %.

4. Agent selon les revendications 1 à 3, caractérisé en ce que le composé polyaluminiumhydroxy se trouve sous forme du chlorure ou du sulfate.

5. Agent selon les revendications 1 à 3, caractérisé en ce que le composé polyaluminiumhydroxy se trouve sous forme du formiate ou de l'acétate.

6. Agent selon l'une des revendications 1 à 5, caractérisé en ce que le produit de co-condensation présente un rapport molaire du dicyandiamide à l'aluminium de 4:1 à 1:4.

7. Procédé de préparation d'un agent selon les revendications 1 à 6, caractérisé en ce qu'on prépare le produit de co-condensation en incorporant le composé polyaluminiumhydroxy dans la résine cationique de dicyandiamide.

8. Procédé selon la revendication 7, caractérisé en ce qu'on chauffe une solution aqueuse de résine cationique de dicyandiamide et de composé polyaluminiumhydroxy à une température de 50 à 120°C.

9. Procédé selon la revendication 7, caractérisé en ce que a) on introduit d'abord les précurseurs du composé polyaluminiumhydroxy sous forme d'ammoniac et de sel d'aluminium, b) on ajoute du formaldéhyde et du dicyandiamide et c) on chauffe le mélange de réaction pour la co-condensation.

10. Procédé selon la revendication 7, caractérisé en ce que a) on introduit d'abord les précurseurs du composé polyaluminiumhydroxy sous forme d'ammoniac et de sel d'aluminium, b) on chauffe le mélange réactionnel à une température de 50 à 120°C pour former le composé polyaluminiumhydroxy, c) on ajoute ensuite, éventuellement après refroidissement, du formaldéhyde et du dicyandiamide et d) on chauffe à nouveau le mélange réactionnel pour la co-condensation.

11. Procédé selon les revendications 9 ou 10, caractérisé en ce qu'on effectue la co-condensation à des températures de 50 à 120°C.

12. Procédé selon l'une des revendications 9 à 11, caractérisé en ce qu'on utilise $AlCl_3$ comme sel d'aluminium.

13. Application de l'agent selon les revendications 1 à 6 pour l'encollage du papier en une quantité de 0,1 à 5 % en poids de matière solide du produit de co-condensation par rapport au poids sec du papier.

14. Application selon la revendication 13 en une quantité de 0,2 à 1,0 % en poids.

**Revendications pour l'Etat contractant suivant : ES**

1. Procédé de préparation d'un agent de floculation et/ou de fixation pour l'encollage du papier dans un domaine de pH faiblement acide à faiblement alcalin, qui contient en une quantité prédominante ou est constitué par un produit de co-condensation d'une résine cationique de dicyandiamide et d'un composé polyaluminiumhydroxy, caractérisé en ce qu'on prépare le produit de co-condensation en incorporant le composé polyaluminiumhydroxy dans la résine cationique de dicyandiamide.

2. Procédé selon la revendication 1, caractérisé en ce qu'on utilise comme résine cationique de dicyandiamide le produit de réaction d'1 mole de dicyandiamide avec 1,0 à 4,0 moles de formaldéhyde en présence de 0,1 à 2,0 moles d'un acide inorganique ou organique et/ou d'un sel d'ammonium ou d'amine d'un acide inorganique ou organique et éventuellement de 0,05 à 0,5 mole d'une mono- ou polyamine.

3. Procédé selon les revendications 1 et 2, caractérisé en ce qu'on utilise un composé polyaluminiumhydroxy ayant une teneur en $Al_2O_3$ de 5 à 20 %.

4. Procédé selon les revendications 1 à 3, caractérisé en ce qu'on utilise le composé polyaluminiumhydroxy sous forme du chlorure ou du sulfate.

5. Procédé selon les revendications 1 à 3, caractérisé en ce qu'on utilise le composé polyaluminiumhydroxy sous forme du formiate ou de l'acétate.

6. Procédé selon l'une des revendications 1 à 5, caractérisé en ce qu'on prépare le produit de co-condensation dans un rapport molaire du dicyandiamide à l'aluminium de 4:1 à 1:4.

7. Procédé selon la revendication 1, caractérisé en ce qu'on chauffe une solution aqueuse de résine cationique de dicyandiamide et de composé polyaluminiumhydroxy à une température de 50 à 120°C.

8. Procédé selon la revendication 1, caractérisé en ce que a) on introduit d'abord les précurseurs du composé polyaluminiumhydroxy sous forme d'ammoniac et de sel d'aluminium, b) on ajoute du formaldéhyde et du dicyandiamide et c) on chauffe le mélange de réaction pour la co-condensation.

9. Procédé selon la revendication 1, caractérisé en ce que a) on introduit d'abord les précurseurs du composé polyaluminiumhydroxy sous forme d'ammoniac et de sel d'aluminium, b) on chauffe le mélange réactionnel à une température de 50 à 120°C pour former le composé polyaluminiumhydroxy, c) on ajoute ensuite, éventuellement après refroidissement, du formaldéhyde et du dicyandiamide et d) on chauffe à nouveau le mélange réactionnel pour la co-condensation.

10. Procédé selon les revendications 8 ou 9, caractérisé en ce qu'on effectue la co-condensation à des températures de 50 à 120°C.

11. Procédé selon l'une des revendications 8 à 10, caractérisé en ce qu'on utilise $AlCl_3$ comme sel d'aluminium.

12. Application de l'agent préparé selon les revendications 1 à 11 pour l'encollage du papier en une quantité de 0,1 à 5 % en poids de matière solide du produit de co-condensation par rapport au poids sec du papier.

13. Application selon la revendication 12 en une quantité de 0,2 à 1,0 % en poids.